## Europäisches Patentamt

## European Patent Office

## Office européen des brevets

(11) Publication number: **0 115 348**
**B1**

## EUROPEAN PATENT SPECIFICATION

(45) Date of publication of patent specification: **22.04.87**

(51) Int. Cl.⁴: **G 06 F 15/16, H 04 L 11/16**

(21) Application number: **84100872.5**

(22) Date of filing: **27.01.84**

(54) Remote initialization of interconnected communications stations.

(30) Priority: **28.01.83 JP 13311/83**

(43) Date of publication of application:
**08.08.84 Bulletin 84/32**

(45) Publication of the grant of the patent:
**22.04.87 Bulletin 87/17**

(84) Designated Contracting States:
**DE FR GB**

(56) References cited:
**EP-A-0 036 172**
**GB-A-2 062 914**

**FIFTEENTH IEEE COMPUTER SOCIETY
INTERNATIONAL CONFERENCE COMPCON 77,
6th-9th September 1977, Washington, D.C.,
pages 320-325, IEEE, New York, US, M.
TOKORO et al.: "Acknowledging ethernet"**

(73) Proprietor: **NEC CORPORATION
33-1, Shiba 5-chome, Minato-ku
Tokyo 108 (JP)**

(72) Inventor: **Tada, Masahiro
c/o NEC Corporation 33-1, Shiba 5-chome
Minato-ku Tokyo (JP)**

(74) Representative: **Vossius & Partner
Siebertstrasse 4 P.O. Box 86 07 67
D-8000 München 86 (DE)**

Courier Press, Leamington Spa, England.

**Description**

The present invention relates generally to a communications network which exchanges information between communications stations through a common transmission link and particularly to a communications network in which any station is capable of initializing any other station.

Multi-station communications networks such as loop or bus topology local area networks often include a plurality of master stations and a plurality of slave stations. Master stations may facilitate initial program loading to slave stations, as typically shown and described in US—A— 4 335 426 (corresponds to EP—A—36172).

EP—A—36 172 (US—A—4 335 426) discloses a multi-station processor intercommunication system in which a response frame is sent to the station performing initialization (cf 1st portion of claim 1). The specific structure or method for forming a clearly related response or confirmation signal is, however, not explained in detail.

Further communications networks having a plurality of communications stations each having an identification code and interconnected by a common transmission link and each of said stations comprising memory means and data processing means are disclosed in GB—A— 2 062 914 and in the report on the 15th IEEE Computer Society International Conference compcon 77, 6th to 9th September 1977, pages 320 to 325. These documents do, however, also not disclose any specific structure or method for the confirmation signal.

Accordingly, an object of the invention is to provide a communications network which permits initialization to be effected under the command issued from any station to any other station in the network and allows a clearly related confirmation message to be returned from the destination station to the source station, in a simple manner.

This object is achieved by the features in claims 1 and 2.

In the communications network according to the invention in which a plurality of stations are interconnected by a common transmission link, there is transmitted from a given source station a message including a destination address code, a source address code and an initializing code, to the transmission link. The transmitted message is received at a destination address station specified by the received destination address code to initialize the destination station. The received source address code is stored in a memory and retrieved when the initialization is completed. A return message including the retrieved source address code, the destination address code and an end-of-initialization code is transmitted to the transmission link to allow the source station to confirm that the destination station has been initialized.

The present invention will be described in further detail with reference to the accompanying drawings, in which:

Fig. 1 is a schematic illustration of a loop topology local area network;

Fig. 2 is a schematic illustration of a bus topology local area network;

Fig. 3 is a block diagram of a communications station of the network;

Fig. 4 is an illustration of details of the computer of Fig. 3;

Fig. 5 is an illustration of details of the adapter of Fig. 4;

Figs. 6 and 7 are illustrations of the format of an initialization message frame and a return message frame, respectively; and

Figs. 8 and 9 are flowcharts describing the operation of the microprocessor of Fig. 5.

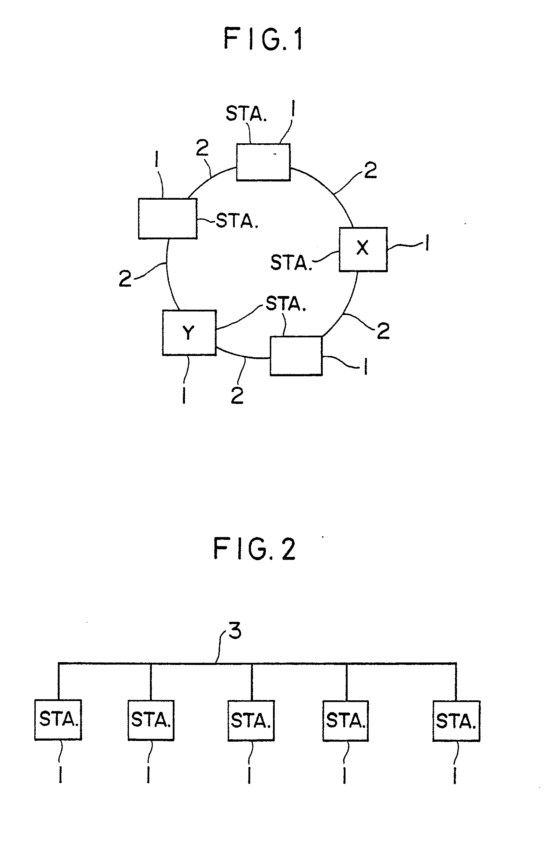

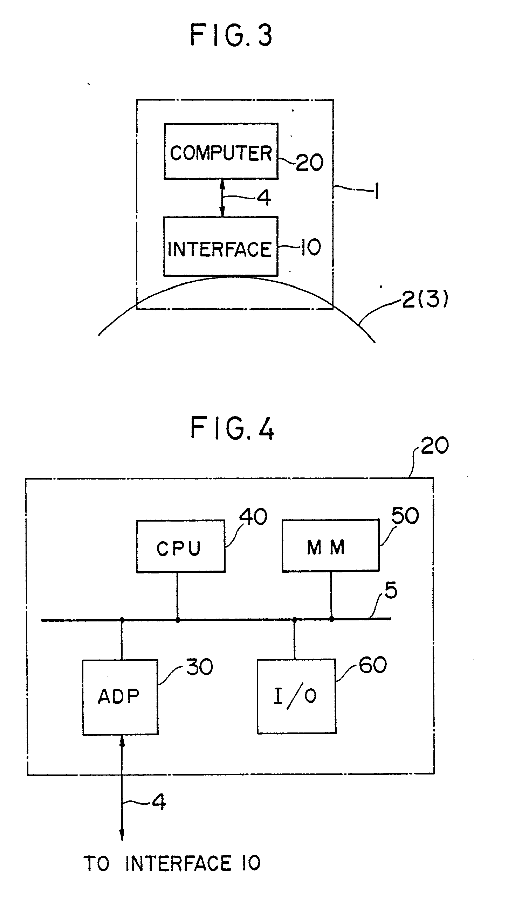

In Fig. 1, there is shown a local area network of the loop topology configuration embodying the invention. The network comprises a plurality of communications stations 1 connected by a looped common transmission link 2. In a local area network of the bus topology configuration embodying the invention, shown in Fig. 2, stations 1 are connected by a common transmission link 3. As shown in Fig. 3, each of the communications stations 1 comprises an interface unit 10 which acts as an interface between the common transmission link and a computer 20. Data transfer between the interface unit 10 and computer 20 is made in serial or parallel form via a link 4. Obviously, the interface unit 10 may be integrated with the computer 20.

As shown in Fig. 4, the computer 20 typically comprises a central processing unit (CPU) 40, a main memory 50, an input/output port 60 and an adapter 30, all of which are connected by a common bus 5.

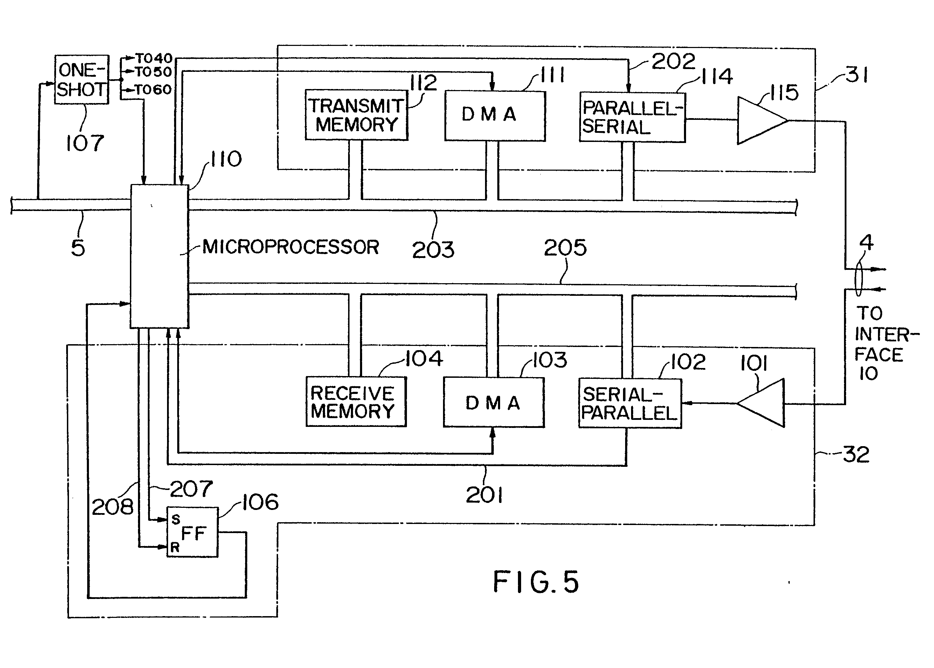

Details of the adapter 30 of Fig. 4 are illustrated in Fig. 5. The adapter 30 generally comprises a microprocessor 110, a transmitter 31 and a receiver 32. The transmitter 31 includes a direct memory access controller (DMA) 111, a transmit memory 112, and a parallel-to-serial converter 114, all of which are connected by internal bus 203 (control, address and data) with the microprocessor 110. The receiver 32 is formed by a serial-to-parallel converter 102, a direct memory access controller 103 and a receive memory 104, all of which are connected by internal bus 205 with microprocessor 110. The serial output of the converter 114 is amplified at 115 and sent over the link 4 to the interface unit 10 and a serial input from the interface unit 10 is applied through the link 4, and amplified at 101 and is applied to the converter 102. In a practical aspect, the microprocessor 110 comprises INTEL iAPX 86/10 8-bit HMOS microprocessor and an 8259A Programmable Interrupt Controller, and each of the direct access memory controllers 103 and 111 is available as INTEL 8237A Programmable DMA Controller. INTEL 8274 Multi-Protocol Serial Controller can be used for parallel-to-serial converter 114 and serial-to-parallel converter 102.

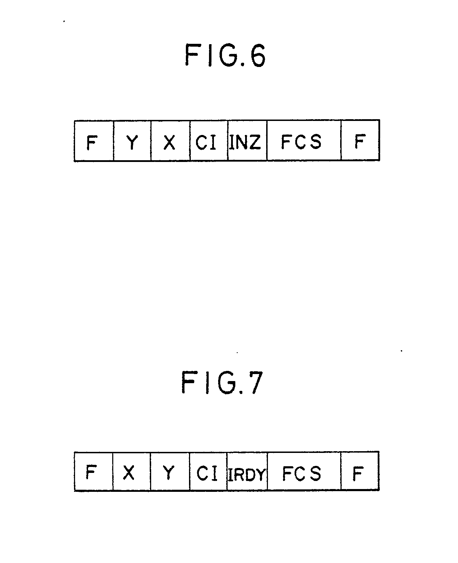

Different address codes are individually assigned to the communications stations in the network. Fig. 6 shows the format of an initialization frame which is transmitted from an originating station. Initialization is originated from any one of the stations 1 having an address code X to any other station having an address code Y (Fig. 1). The station X transmits a frame which comprises a flag F at the start of transmission, a destination address code Y, a source address code X, a control code CI, an initialization instruction INZ, a frame check sequence FCS, and another flag F at the end of transmission. Upon receipt of the Y address code, the interface unit 10 of the station Y transfers this address code over the link 4 to the adapter 30 of the computer 20.

The signal is conditioned by the amplifier 101 and fed to the converter 102 and converted to a 8-bit (byte) parallel signal. This parallel signal is applied through the bus 205 to the receive memory 104 under control of the direct memory access controller 103 and stored into memory 104.

Upon detection of the second flag F at the end of the initialization frame, the serial-to-parallel converter 102 provides an interrupt signal through a line 201 to the microprocessor 110. An interrupt signal is also generated when the end-of-transmission flag of data frames is detected.

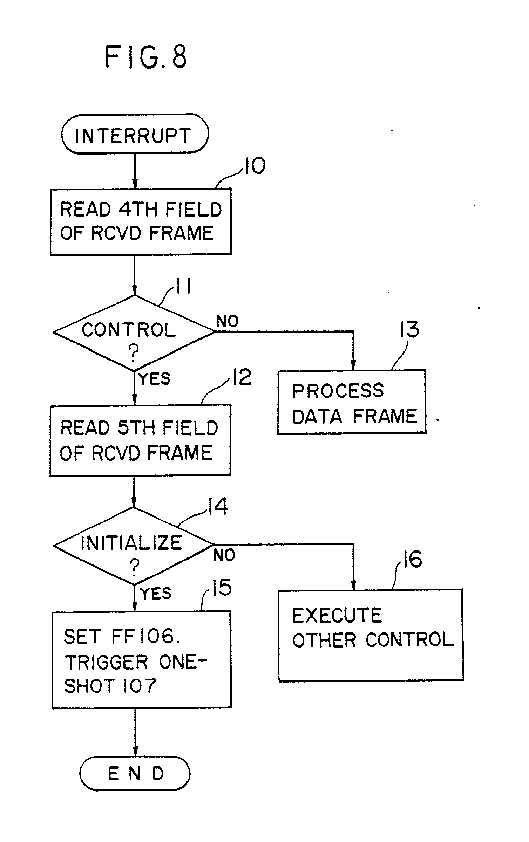

Fig. 8 is a flowchart describing the operation of the microprocessor 110 when interrupt signal is issued. At Step 10, the microprocessor reads the fourth field of the received frame stored in memory 104 and goes to Step 11 to check to see if it contains a control code (CI). If so, the microprocessor advances to Step 12 to read the fifth field of the stored frame and goes to Step 14 to check if it contains an initialization instruction. If an initialization instruction is detected in the fifth field, control advances to Step 15 to trigger the flip-flop 106 into set condition. If control code is not detected in the fourth field in Step 11, control goes to Step 13 in which data frame process routine is executed. Likewise, if an initialization instruction is not detected in the fifth field in Step 14, control goes to Step 16 to perform other control functions specified in the fifth field of the received frame.

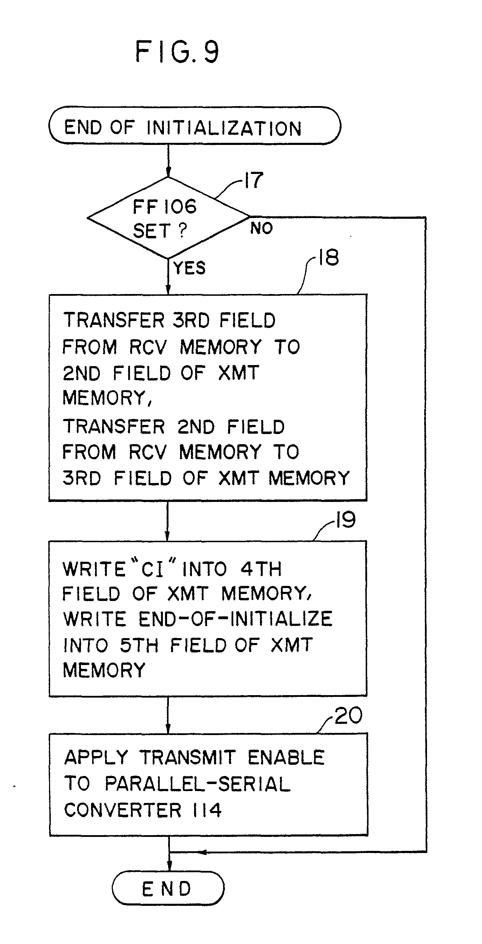

Simultaneously with the flip-flop 106 being triggered, a one-shot multi-vibrator 107 is triggered by the microprocessor 110 to issue initialization signals during a predetermined period to the CPU 40, main memory 50 and input/output port 60 of the computer 20. At this moment, the receive memory 104 and flip-flop 106 are excluded from this initialization. Upon the termination of the predetermined period of initialization, microprocessor 110 starts executing the instructions described in Fig. 9 to generate a return message frame, and the flip-flop 106 is triggered into a reset condition.

At Step 17, the flip-flop 106 is checked. If the flip-flop 106 is in reset condition, microprocessor 110 generates no return message. If the flip-flop is in set condition, the microprocessor interprets it as an origination of initialization from another station, and goes to Step 18 to transfer the third field of the stored frame bearing the source address information from the receive memory 104 to the second field of the frame in the transmit memory 112 and transfer the second field of the stored frame bearing the own station address to the third field of the transmit frame. Control goes to Step 19 to write a control code (CI) and an end-of-initialize code (IRDY) in the fourth and fifth fields of the transmit frame, respectively, to complete a return message as shown in Fig. 7.

A transmit enable signal is then applied on line 202 from the microprocessor at Step 20 to the parallel-to-serial converter 114 for transmission to the interface unit 10 and thence to the common link 2.

Since the return message contains the code X as a destination address code, it is decoded by the source station X and the fact that the station Y has been successfully initialized is confirmed.

The foregoing description shows only a preferred embodiment of the present invention. Various modifications are apparent to those skilled in the art without departing from the scope of the present invention which is only limited by the appended claims. Therefore, the embodiment shown and described is only illustrative, not restrictive.

## Claims

1. A method of initializing communications stations each having an identification code and innterconnected by a common transmission link in a communications network, each of said communications stations comprising a transmit memory, a receive memory and a control unit which stores into said transmit memory a message comprising a destination code identifying a destination station in the network, a source code identifying the own station and an initialization code, said method comprising the steps of

transmitting the stored message from said transmit memory to said common transmission link,

receiving a message transmitted from another station of the network and storing the received destination code and source code into said receive memory,

checking said destination code against the identification code of the own station to detect a match therebetween, and if said match is detected, initializing the own station and transmitting a return message to said common transmission link to allow the source station to receive the return message,

characterized in that said transmit memory in the receiving station is cleared by said control unit when said match is detected, said return message is formed by said destination code and said source code stored in said receive memory and by an end-of-initialization code, and said return message is stored into said transmit memory prior to transmission to said common transmission link.

2. A communications network for carrying out the method according to claim 1, said network having a plurality of communications stations (1) each having an identification code and interconnected by a common transmission link (2), wherein each of said stations (1) comprises a transmit memory (112), a receive memory (104) and a control unit (110) which stores into said transmit memory (112) a message comprising a destination code identifying a destination station in the network, a source code identifying the own station and an initialization code, transmits the stored message from said transmit memory (112) to said common transmission link (2), receives a message transmitted from another station of the network and stores the received destination code and source code into said receive memory (104), checks said destination code against the identification code of the own station to detect a match therebetween, and if said match is detected, initializes the own station and transmits a return message to said common transmission link (2) to allow the source station to receive the return message, characterized in that said control unit (110) clears said transmit memory (112) when said match is detected, forms said return message by the destination code and source code stored in said receive memory (104) and by an end-of-initialization code, and stores the return message into said transmit memory (112) prior to transmission to said common transmission link (2).

3. A communications network as in claim 2, further characterized in that said return message is formed by transposing the received destination code and source code so that they are transmitted in a sequence which is reverse to that in which they are received from said another station.

**Patentansprüche**

1. Verfahren zum Initialisieren von Fernmeldestationen, die jeweils einen Identifikationscode aufweisen und durch einen gemeinsamen Übertragungsweg in einem Fernmeldenetz miteinander verbunden sind, wobei jede Fernmeldestation einen Sendespeicher, einen Empfangsspeicher und eine Steuereinheit aufweist, die in den Sendespeicher eine Nachricht speichert, die einen eine Bestimmungsstation in dem Netz identifizierenden Bestimmungscode, einen die eigene Station identifizierenden Quellencode und einen Initialisierungscode aufweist, wobei das Verfahren die folgenden Schritte umfasst:
Senden der gespeicherten Nachricht vom Sendespeicher über den gemeinsamen Übertragungsweg,
Empfangen einer von einer anderen Station des Netzes gesendeten Nachricht und Speichern des empfangenen Bestimmungscodes und Quellencodes in den Empfangsspeicher,
Überprüfen des Bestimmungscodes gegen den Identifikationscode der eigenen Station zum Ermitteln einer Übereinstimmung und, wenn die Übereinstimmung ermittelt wird, Initialisieren der eigenen Station und Senden einer Rücknachricht über den gemeinsamen Übertragungsweg, so daß die Quellenstation die Rücknachricht empfängt,
dadurch gekennzeichnet, daß der Sendespeicher in der Empfangsstation von der Steuereinheit gelöscht wird, wenn die Übereinstimmung ermittelt wird, daß die Rücknachricht von dem Bestimmungscode und dem im Empfangsspeicher gespeicherten Quellencode und von einem Initialisierungsschlußcode gebildet wird, und daß die Rücknachricht vor dem Senden über den gemeinsamen Übertragungsweg in den Sendespeicher gespeichert wird.

2. Fernmeldenetz zum Durchführen des Verfahrens nach Anspruch 1, mit mehreren Fernmeldestationen (1), die jeweils einen Identifikationscode aufweisen und über einen gemeinsamen Übertragungsweg (2) miteinander verbunden sind, wobei jede der Stationen (1) einen Sendespeicher (112), einen Empfangsspeicher (104) und eine Steuereinheit (110) aufweist, die in den Sendespeicher (112) eine Nachricht speichert, die einen eine Bestimmungsstation in dem Netz identifizierenden Bestimmungscode, einen die eigene Station identifizierenden Quellencode und einen Initialisierungscode aufweist, die gespeicherte Nachricht von dem Sendespeicher (112) über den gemeinsamen Übertragungsweg (2) sendet, eine von einer anderen Station des Netzes gesendete Nachricht empfängt und den empfangenen Bestimmungscode und Quellencode in den Empfangsspeicher (104) speichert, den Bestimmungscode gegen den Identifikationscode der eigenen Station prüft, um eine Übereinstimmung zwischen diesen zu ermitteln und, wenn die Übereinstimmung ermittelt wird, die eigene Station initialisiert und eine Rücknachricht über den gemeinsamen Übertragungsweg (2) sendet, so daß die Quellenstation die Rücknachricht empfangen kann, dadurch gekennzeichnet, daß die Steuereinheit (110) den Sendespeicher (112) löscht, wenn die Übereinstimmung ermittelt wird, die Rücknachricht aus dem in dem Empfangsspeicher (104) gespeicherten Bestimmungscode und Quellencode und aus einem Initialisierungsschlußcode bildet und die Rücknachricht vor dem Senden über den gemeinsamen Übertragungsweg (2) in den Sendespeicher (112) speichert.

3. Fernmeldenetz nach Anspruch 2, ferner dadurch gekennzeichnet, daß die Rücknachricht dadurch gebildet wird, daß der empfangene Bestimmungscode und Quellencode transponiert werden, so daß sie in einer Reihenfolge gesendet werden, die gegenüber derjenigen, in der sie von der anderen Station empfangen werden, umgekehrt ist.

**Revendications**

1. Procédé d'initialisation de stations de communications ayant chacune un code d'identification et interconnectées par une liaison commune de transmission dans un réseau de communications, chacune des stations de communications comportant une mémoire de transmission, une mémoire de réception et une unité de commande qui stockent dans la mémoire de transmission un message comprenant un code de destination identifiant une station de destination dans le réseau, un code de source identifiant la propre station et un code d'initialisation, le procédé comprenant les étapes consistant à:

— transmettre le message stocké de la mémoire de transmission à la liaison commune de transmission,

— recevoir un message transmis à partir d'une autre station du réseau et à stocker le code de destination reçu et le code de source dans la mémoire de réception,

— contrôler le code de destination par rapport au code d'identification de la propre station afin de détecter leur adaptation et, dans le cas où il y a détection de cette adaptation, initialiser la propre station et transmettre un message de retour à la liaison commune de transmission afin de permettre à la station de source de recevoir le message de retour;

caractérisé en ce que la mémoire de transmission dans la station de réception est effacée par l'unité de commande lorsqu'il y a détection de l'adaptation; le message de retour est formé par le code de destination et le code de source stockés dans la mémoire de réception et par un code de fin d'initialisation, et le message de retour est stocké dans la mémoire de transmission avant la transmission à la liaison commune de transmission.

2. Réseau de communications pour exécuter le procédé selon la revendication 1, le réseau comportant une multitude de stations de communications (1) ayant chacune un code d'identification et interconnectées par une liaison commune de transmission (2), d'où il résulte que chacune des stations (1) comprend une mémore de transmission (112) une mémoire de réception (104) et une unité de commande (110) qui stocke dans la mémoire de transmission (112) un message comprenant un code de destination identifiant une station de destination dans le réseau, un code de source identifiant la propre station et un code d'initialisation, transmet le message stocké de la mémoire de transmission (112) à la liaison commune de transmission (2), reçoit un message transmis à partir d'une autre station du réseau et stocke le code de destination et le code de source reçus dans la mémoire de réception (104), vérifie le code de destination vis-à-vis du code d'identification de la propre station afin de détecter une adaptation entre eux, et en cas de détection d'une telle adaptation, initialise la propre station et transmet un message de retour à la liaison commune de transmission (2) afin de permettre à la station de source de recevoir le message de retour; caractérisé en ce que l'unité de commande (110) efface la mémoire de transmission (112) lorsqu'il y a détection de l'adaptation, forme le message de retour par le code de destination et le code de source stockés dans la mémoire de réception (104) et par un code de fin d'initialisation, et stocke le message de retour dans la mémoire de transmission (112) avant la transmission à la liaison commune de transmission (2).

3. Réseau de communications selon la revendication 2, caractérisé en outre en ce que le message de retour est formé par transposition du code de destination et du code de source reçus de façon qu'ils soient transmis dans une séquence qui est l'inverse de celle dans laquelle ils sont reçus en provenance de l'autre station.

# FIG.1

STA.

STA.

STA.

X

STA.

Y

STA.

# FIG.2

3

STA. STA. STA. STA. STA.

# FIG. 3

COMPUTER ~20

↕ ~4

INTERFACE ~10

1

2(3)

# FIG. 4

20

CPU 40

M M 50

5

ADP 30

I/O 60

~4

TO INTERFACE 10

2

FIG.5

ONE-SHOT 107
T040
T050
T060

TRANSMIT MEMORY 112
D M A 111
PARALLEL-SERIAL 114 202
115 31

MICROPROCESSOR 110
5
203 205
4
TO INTER-FACE 10

RECEIVE MEMORY 104
D M A 103
SERIAL-PARALLEL 102
101
201
32

208 207
S R FF 106

0 115 348

# FIG.6

| F | Y | X | CI | INZ | FCS | F |
|---|---|---|----|-----|-----|---|

# FIG.7

| F | X | Y | CI | IRDY | FCS | F |
|---|---|---|----|------|-----|---|

# FIG. 8

```
            ( INTERRUPT )
                  |
                  |                  10
         +------------------+
         |  READ 4TH FIELD  |
         |  OF RCVD FRAME   |
         +------------------+
                  |
                  |            11
              /        \           NO                    13
         <   CONTROL    >-------------------+     +----------------+
              \   ?    /                    |     |   PROCESS      |
                  | YES                     +---->|   DATA FRAME   |
                  |              12               +----------------+
         +------------------+
         |  READ 5TH FIELD  |
         |  OF RCVD FRAME   |
         +------------------+
                  |
                  |             14
              /        \
         < INITIALIZE   >        NO                      16
              \   ?    /------------------+     +----------------+
                  | YES        15         |     |   EXECUTE      |
                  |                       +---->|   OTHER CONTROL|
         +------------------+                   +----------------+
         |  SET FF 106.     |
         |  TRIGGER ONE-    |
         |  SHOT 107        |
         +------------------+
                  |
              ( E N D )
```

**0 115 348**

# FIG. 9

```
┌────────────────────────────┐
│    END OF INITIALIZATION    │
└────────────────────────────┘
              │
              ▼
          ╱───────╲    17
         ╱  FF 106  ╲
        ╱   SET ?    ╲  NO ──────────┐
         ╲          ╱                 │
          ╲───────╱                   │
              │ YES                    │
              ▼          18            │
┌──────────────────────────┐          │
│ TRANSFER 3RD FIELD        │          │
│ FROM RCV MEMORY TO        │          │
│ 2ND FIELD OF XMT          │          │
│ MEMORY,                   │          │
│ TRANSFER 2ND FIELD        │          │
│ FROM RCV MEMORY TO        │          │
│ 3RD FIELD OF XMT MEMORY   │          │
└──────────────────────────┘          │
              │          19            │
              ▼                        │
┌──────────────────────────┐          │
│ WRITE "CI" INTO 4TH       │          │
│ FIELD OF XMT MEMORY,      │          │
│ WRITE END-OF-INITIALIZE   │          │
│ INTO 5TH FIELD OF XMT     │          │
│ MEMORY                    │          │
└──────────────────────────┘          │
              │          20            │
              ▼                        │
┌──────────────────────────┐          │
│ APPLY TRANSMIT ENABLE     │          │
│ TO PARALLEL-SERIAL        │          │
│ CONVERTER 114             │          │
└──────────────────────────┘          │
              │                        │
              ▼◄───────────────────────┘
        ┌───────────┐
        │    END    │
        └───────────┘
```

6